Europäisches Patentamt

European Patent Office

Office européen des brevets

(19)

(11) EP 1 280 141 A2

(12) **EUROPEAN PATENT APPLICATION**

(43) Date of publication:
**29.01.2003 Bulletin 2003/05**

(51) Int Cl.⁷: **G11B 7/007**

(21) Application number: **02016251.7**

(22) Date of filing: **22.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **24.07.2001 JP 2001223488**

(71) Applicant: **Pioneer Corporation
Meguro-ku, Tokyo (JP)**

(72) Inventor: **Tomita, Yoshimi, Pioneer Corp.,
Corporate Research
Tsurugashima-shi, Saitama 350-2288 (JP)**

(74) Representative:
**Manitz, Finsterwald & Partner GbR
Postfach 31 02 20
80102 München (DE)**

(54) **Recording disc and apparatus for playing back recorded information**

(57) Wobbles or a wobbling characteristic (manner, shape, configuration) of a groove track formed on a re- cording disc represents a type of the recording disc. Therefore, a master disc used for manufacturing such recording discs can be prepared in an easy manner.

FIG.2

EP 1 280 141 A2

**Description**

BACKGROUND OF THE INVENTION

1. Field of the Invention

The present invention relates to a recording disc and an apparatus for playing back (retrieving) recorded information from the recording disc.

2. Description of the Related Art

Various optical discs are known in the art, which are used as optical recording medium to record voice, sound, image, picture, computer data and the like. Examples of such optical discs are DVD-ROM, DVD-R (recordable) and DVD-RW (rewritable). DVD-ROM is an example of a read-only type. DVD-R is an example of a write once type. DVD-RW is an example of an erasable type. A desired apparatus for retrieving the recorded information from the optical disc is a compatible disc player (simply referred to as "disc player" hereinafter) which can perform the information retrieval from any types of optical discs. When the optical disc is put into the disc player, the disc player first reads information about the type of the optical disc from a read-in region of the optical disc, in order to find out a reading (scanning) scheme most suited for that disc type.

To prevent a user from deleting or rewriting the information about the disc type, this information is recorded on the disc in the form of embossed pattern extending in a scanning direction. The embossed pattern includes a series of island-like projections. The height of the embossed pattern is $\lambda/(4n)$, which is a height that allows the disc player to obtain a read signal having the largest amplitude during the reading process. $\lambda$ represents the wavelength of a scanning beam (reading beam) and n represents a refractive index of a substrate of the optical disc.

When the optical disc is DVD-R or DVD-RW which admits the data writing, the optical disc has projecting tracks to have marks (indicia) thereon as recorded information. The tracks have a height of $\lambda/(8n)$. When a master disc for the DVD-Rs and DVD-RWs is prepared, therefore, the master disc has to be cut such that the master disc has grooves having a depth of $\lambda/(8n)$ for the tracks and grooves having a depth of $\lambda/(4n)$ for the embossed pattern. In a manufacturing process for the master disc, therefore, a power of a recording laser should be adjusted to make the two types of grooves having different depths. In reality, however, it is difficult to create (cut) optimal grooves (particularly tracks) by adjusting the recording laser power. If an electron beam exposure method is utilized for creation of the grooves to increase a recording density of the optical disc, it is extremely difficult to make the grooves having different depths for the tracks and embossed pattern on a master disc.

SUMMARY OF THE INVENTION

An object of the present invention is to provide a recording disc, of which master disc is easy to manufacture even when the recording disc has to have information about a disc type.

Another object of the present invention is to provide an apparatus for retrieving (playing back) recorded information from such recording disc.

According to one aspect of the present invention, there is provided a recording disc comprising a wobbling recording track on which marks are formed as recorded information, wherein the wobbling recording track has a predetermined wobbling manner (characteristic), which corresponds to a type of the recording disc, in a predetermined area on the recording disc.

Since the wobbling manner (characteristic) of the groove track represents the type of the recording disc, a master disc for such recording disc can be cut at a single depth, i.e., only at a depth of the groove track. Accordingly, it is unnecessary to change a power of a recording laser when fabricating the master disc. Therefore, the master disc can easily be prepared with the laser cutting machine (method). In addition, an electron beam exposure method can be employed to make the master disc.

According to another aspect of the present invention, there is provided an apparatus for retrieving recorded information from a recording disc, the recording disc having a recording track on which marks are formed as the recorded information, the apparatus comprising: a reader for reading the recorded information from the recording track to obtain a read signal; a wobble detector for detecting a wobble signal having a waveform which corresponds to a wobbling shape of the recording track or to a wobbling manner (characteristic) of a wobble pit train defined by a series of wobble pits, on the basis of the read signal; and a disc type information detector for obtaining disc type information which represents a type of the recording disc on the basis of the waveform of the wobble signal.

BRIEF DESCRIPTION OF THE DRAWINGS

Figure 1 schematically illustrates areas defined on a recording disc such as DVD-ROM, DVD-R and DVD-RW according to one embodiment of the present invention;
Figure 2 illustrates a partial perspective view of a recording surface of the recording disc shown in Figure 1;
Figure 3 illustrates a format of each coded block in a data area of the recording disc shown in Figure 1;
Figure 4 illustrates an example of synchronization wobble pattern;
Figure 5A illustrates an example of wobble pattern which represents a logic level "1";

Figure 5B illustrates an example of wobble pattern which represents a logic level "0";

Figure 6 illustrates a format of each coded block in a control data area of the recording disc shown in Figure 1;

Figure 7 illustrates wobble pit trains recorded on the recording disc as disc type information when the recording disc is DVD-ROM;

Figure 8 schematically illustrates a structure of a disc recorder for recording information (data) on the recording disc and retrieving information from the recording disc; and

Figure 9 illustrates an arrangement of four optical detectors located in a recording/retrieving head of the disc recorder shown in Figure 8.

DETAILED DESCRIPTION OF THE INVENTION

Now, embodiments of the present invention will be described in reference to the accompanying drawings.

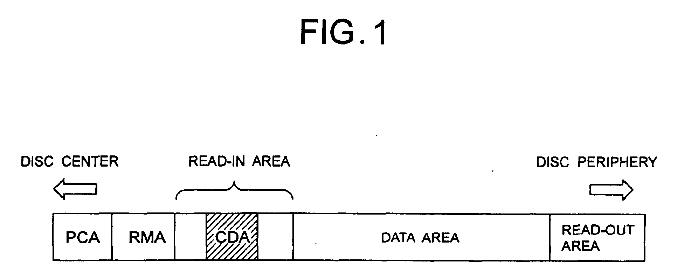

Referring to Figure 1, a plurality of areas on an exemplary recording disc such as DVD-ROM, DVD-R and DVD-RW are schematically illustrated. DVD-ROM, DVD-R and DVD-RW are examples of recording discs according to the present invention.

As shown in Figure 1, the areas of the recording disc include a PCA (Power Calibration Area), RMA (Recording Management Area), read-in area, data area and read-out area, arranged in this order from the center of the recording disc towards the periphery of the recording disc. PCA is a region in which a trial writing is performed to decide the recording power of a laser beam. RMA is a region in which management information with respect to the recordation is written. It should be noted that when the recording disc is DVD-ROM, the recording disc does not have PCA and RMA. The read-in area includes a control data area CDA in which various control data for the recording disc are recorded.

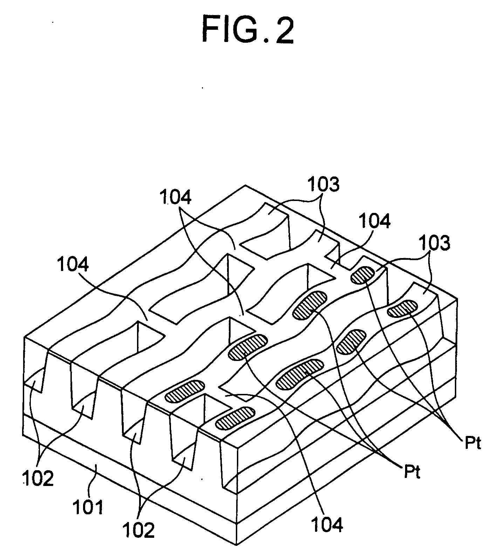

Referring to Figure 2, a recording surface of the recording disc shown in Figure 1 is partly illustrated.

Groove tracks (convex tracks) 103 and land tracks (concave tracks) 102 are formed spirally or concentrically on a disc substrate 101. Information marks Pt, which represent recorded information, are created on the groove tracks 103. A plurality of LPPs (land pre-pits) 104 are formed on the land tracks 102. LPPs 104 are provided beforehand on the land tracks 102 as indicia, which are used by a disc recorder to know recording timing and addresses when the disc recorder records information/data. The groove tracks 103 extend through PCA, RMA, read-in area, data area and read-in area (Figure 1). The groove tracks 103 are wobbling tracks. It should be noted, however, that the wobbling is exaggeratedly depicted in Figure 2 for easier understanding of the wobbling. In an actual configuration, the track wobbles at an amplitude of about 1 to 3% of the track pitch.

A plurality of coded blocks are recorded on the recording disc. The wobbling of the groove tracks 103 has different shapes, as will be described later, to represent a front position of each coded block, a type of the coded block and a type of the recording disc.

The recording disc of this embodiment is a so-called high density recordation disc, and for example fabricated from a master disc prepared by an electron beam exposure method. A track pitch of the groove tracks 103 is less than 0.35 microns, or a minimum inverting interval of the information marks Pt is smaller than 0.2 microns.

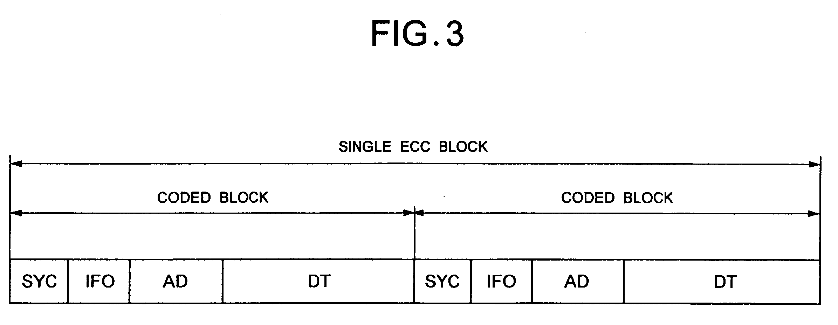

Referring to Figure 3, coded blocks in the data area (Figure 1) are illustrated. Each coded block has a format.

Two successive coded blocks define one ECC (Error Correction Code) block as shown in Figure 3. A synchronization pattern SYC is written in a front portion of each coded block to represent (indicate) a front position of the coded block. After the synchronization pattern SYC, the coded block includes block information IFO, address AD and data DT sequentially.

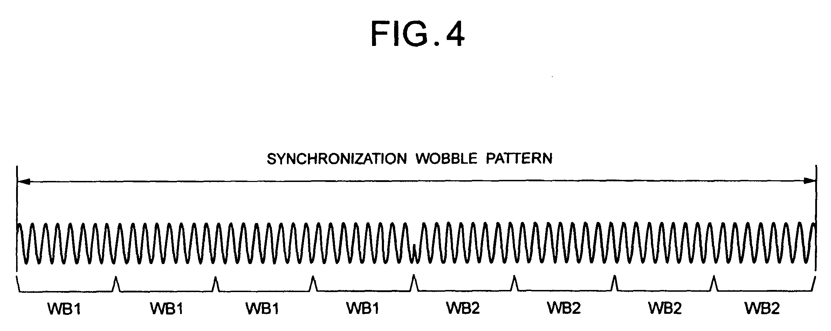

The synchronization pattern SYC is detected when a pickup of a disc player traces a certain section, which has a wobble pattern shown in Figure 4, on the groove track 103. The synchronization wobble pattern includes four continuous first wobble trains WB1 and four continuous second wobble trains WB2. Each wobble train WB1, WB2 includes eight-period-worth wobbles. The first wobble train WB1 has a different phase from the second wobble train WB2.

As understood from the above, the groove track 103 wobbles as shown in Figure 4 in the front portion of each coded block. It should be noted that the wobbling is exaggeratedly depicted in Figure 4 for easier understanding. In actuality, the amplitude of the wobbling is about 1 to 3% of the track pitch.

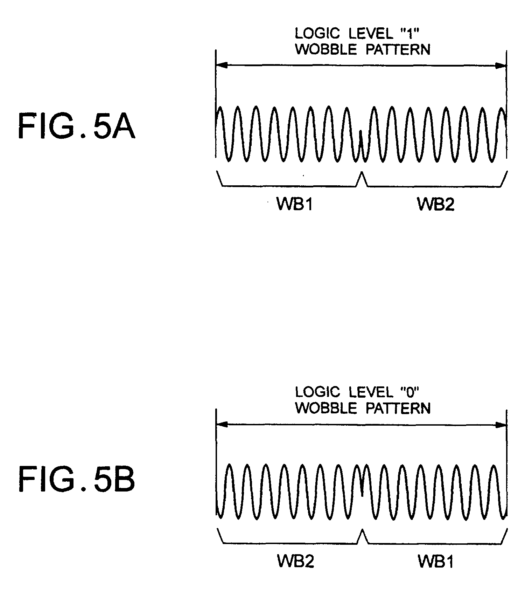

The block information IFO shown in Figure 3 represents various information about the coded block. For instance, the block information IFO includes block identification information to indicate to which area (namely, one of the data area, read-in area and control data area) the coded block concerned belongs. Binary data of logic levels "0" and "1" which corresponds to the information about the coded block is represented by the wobbling shape of the groove track 103. For example, the groove track 103 has a wobbling pattern as shown in Figure 5A when representing the logic level "1". Specifically, the wobbling pattern defined by the first wobble train WB1 and second wobble train WB2 indicates the logic level "1". On the other hand, the groove track 103 has a wobbling pattern as shown in Figure 5B when representing the logic level "0". Specifically, the wobbling pattern defined by the second wobble train WB2 and first wobble train WB1 indicates the logic level "0".

After the synchronization wobble pattern shown in Figure 4, therefore, the groove track 103 has the wobble shapes made of the logic "1" patterns (Figure 5A) and the logic "0" patterns (Figure 5B) in accordance with the information written in the block information IFO.

The address AD shown in Figure 3 represents the address of the coded block, and is detected by the pickup of the disc player when scanning the LPPs 104 (Figure 2). The data DT shown in Figure 3 is retrieved (played back) information/data, which is obtained when the pickup of the disc player scans the information marks Pt on the groove track 103 and the disc player plays back the information marks Pt.

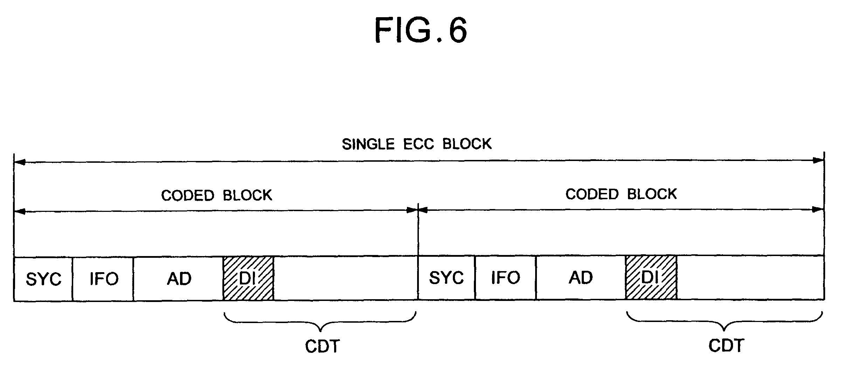

Figure 6 illustrates a format of the coded block in the control data area CDA (Figure 1).

A single ECC block includes two continuous coded blocks. Each coded block includes the synchronization pattern SYC, block information IFO and address AD, like the coded block format of the data area shown in Figure 3. The coded block in the control data area, however, includes control data CDT in the place of the data DT.

The control data CDT is 6-byte data, for example. Upper 4 bits of the data represent the disc type information DI. The disc type information DI is 4-bit information to indicate whether the recording disc is DVD-ROM, DVD-R or DVD-RW.

For instance, the 4-bit disc type information DI "0000" indicates that the recording disc is DVD-ROM, "0001" indicates that the recording disc is DVD-RW, and "0010" indicates that the recording disc is DVD-R.

Each bit is a logic level "1" or "0", and represented by the wobbling shape of the groove track 103 itself, or the wobbling characteristic of a series of wobble pits. If the recording disc is a writable (recordable) disc such as DVD-R or DVD-RW, the wobbling shape of the groove track itself represents the disc type information DI (4-bit information). For example, when the wobbling shape of the groove track 103 has the pattern shown in Figure 5A, i.e., the first wobble train WB1 and second wobble train WB2, then the wobbling shape represents the logic level "1". On the other hand, when the wobbling shape of the groove track 103 has the pattern shown in Figure 5B, i.e., the second wobble train WB2 and first wobble train WB1, then the wobbling shape represents the logic level "0". When the recording disc is DVD-RW, a wobble sequence of the groove track 103 includes three Figure 5B patterns and one Figure 5A pattern sequentially. When the recording disc is DVD-R, the wobble sequence of the groove track 103 includes two Figure 5B patterns, one Figure 5A pattern and one Figure 5B pattern sequentially.

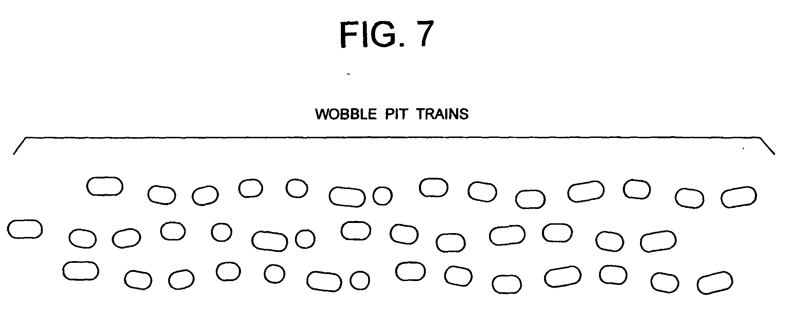

When the recording disc is DVD-ROM, a series of wobble pits (wobble pit trains) as shown in Figure 7 are formed in the control data area CDA on the recording disc. The wobbling manner (characteristic) defined by the wobble pit trains shown in Figure 7 corresponds to (is equivalent to) the wobbling shape of the groove track 103, and represents the wobble pattern made of the Figure 5A and/or 5B patterns. The wobbling manner represents the disc type information which indicates that the recording disc is DVD-ROM. Specifically, the wobble pattern shown in Figure 7 includes four Figure 5B patterns.

As described above, the wobbling manner (shape, pattern, arrangement, configuration) of the groove track of the recording disc represents the type of the recording disc in this embodiment. Therefore, when the master disc for the recording disc is fabricated (cut), the cutting is performed only at the depth of the groove track. In other words, it is not necessary to change the recording laser power during the master disc cutting operation. Accordingly, the master disc preparation can be done easily by the laser cutting. Further, the electron beam exposure method can be utilized to manufacture the master disc.

In order to increase a recording density of the recording disc, a track pitch of the recording disc should be reduced or a minimum inverting interval of the recordation marks should be reduced. The laser cutting process (or machine), however, cannot make a master disc for a high recording density disc when the disc has to have a track pitch less than 0.35 microns or a minimum inverting interval of the information marks less than 0.2 microns. The electron beam exposure process (or machine) is utilized to fabricate a master disc for such high recording density disc. The recording disc of the above described embodiment allows easy fabrication of the master disc for the high recording density disc.

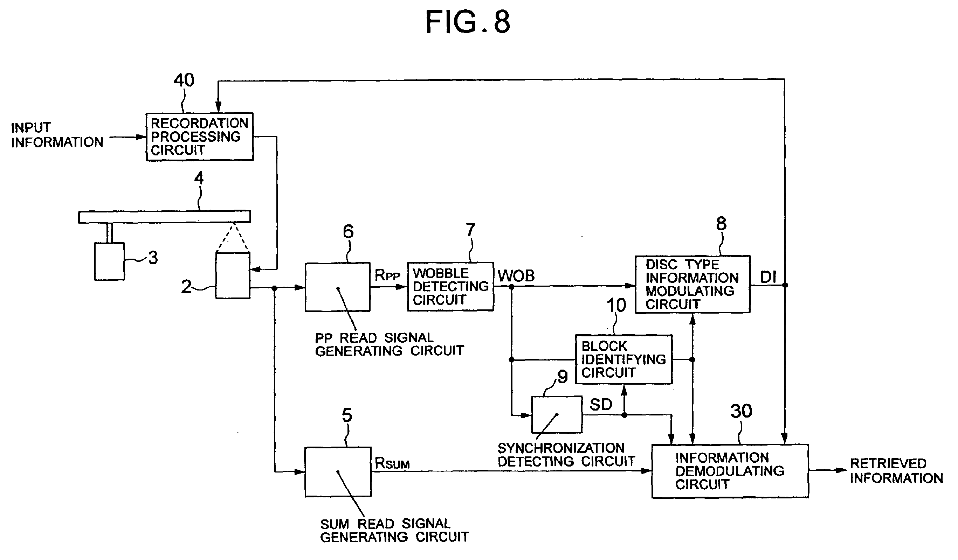

Referring to Figure 8, a structure of a disc recorder for recording information on the recording disc and playing back the recorded information from the recording disc is illustrated.

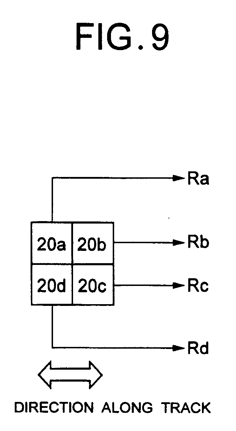

The recording disc 4 is rotated by a spindle motor 3. A recording/playing back head 2 traces (follows) the groove track 103 of the rotating recording disc 4 and radiates a scanning beam on the groove track 103. The head 2 has four optical detectors 20a to 20d, as shown in Figure 9, to receive the light reflecting from the recording disc 4. The optical detectors 20a to 20d are arranged relative to the groove track 103 as depicted in Figure 9. The optical detectors 20a to 20d apply photoelectric conversion on the incoming light and produce read signals Ra to Rd respectively.

The signals Ra to Rd are supplied to a sum read signal generating circuit 5 from the head 2. The sum read signal generating circuit 5 calculates a read signal Rsum using the following equation:

$$Rsum = Ra + Rb + Rc + Rd$$

The circuit 5 sends the resultant to an information (data) demodulation circuit 30.

The signals Ra to Rd are also supplied to a push-pull read signal generating circuit 6 from the head 2. The push-pull read signal generating circuit 6 calculates a push-pull read signal Rpp using the following

equation:

$$Rpp = (Ra + Rb) - (Rc + Rd)$$

The circuit 6 sends the resultant to a wobble detection circuit 7.

The wobble detection circuit 7 detects from the pull-push read signal Rpp a waveform, which represents the wobbling shape of the groove track 103 or the wobbling characteristic of the wobble pit trains shown in Figure 7, to produce a wobble signal WOB. The wobble signal WOB is sent to a disc type information demodulation circuit 8 and synchronization detecting circuit 9 respectively. The synchronization detecting circuit 9 generates a synchronization detection signal SD every time the circuit 9 detects a signal waveform, which corresponds to the synchronization wobble pattern shown in Figure 4, in the wobble signal WOB. The block identifying circuit 10 takes (accepts) a signal waveform, which corresponds to the wobble shape of the groove track 103 immediately after the synchronization wobble pattern of Figure 4, from the wobble signal WOB in accordance with the synchronization detection signal SD. The block identification circuit 10 determines (identifies) whether the coded block is a coded block in the data area (Figure 1) or a coded block in the control data area CDA (Figure 1), on the basis of the wobble pattern represented by the signal waveform. For example, when the waveform of the wobble signal WOB corresponds to the wobble pattern shown in Figure 5B, the block identification circuit 10 determines that the coded block which is now being retrieved is the coded block in the data area, and produces a block identification signal of logic level "0". On the other hand, when the waveform of the wobble signal WOB corresponds to the wobble pattern shown in Figure 5A, then the block identification circuit 10 determines that the coded block currently retrieved is the coded block in the control data area CDA, and produces a block identification signal of logic level "1".

Only when the disc type information demodulation circuit 8 receives the block identification signal of logic level "1", i.e., only when the coded block in the current retrieving process is the coded block in the control data area CDA, the disc type information demodulation circuit 8 takes the wobble signal WOB. The demodulation circuit 8 demodulates the wobble signal WOB to the disc type information DI, which represents the type of the disc of the recording disc 4, on the basis of the waveform of the wobble signal WOB. Specifically, when the waveform of the wobble signal WOB is the four continuous Figure 5B wobble patterns, the demodulation circuit 8 demodulates the wobble signal WOB to 4-bit information "0000". This information is the disc type information DI and indicates that the recording disc is DVD-ROM. When the waveform of the wobble signal WOB is the three continuous Figure 5B wobble patterns and the single Figure 5A wobble pattern, the demodulation circuit 8 demodulates the wobble signal WOB to another 4-bit information "0001", which is the disc type information DI indicating that the recording disc is DVD-RW. When the waveform of the wobble signal WOB is the two continuous Figure 5B wobble patterns, the single Figure 5A wobble pattern and the single Figure 5B wobble pattern, then the demodulation circuit 8 demodulates the wobble signal WOB to still another 4-bit information "0010", which is the disc type information DI indicating that the recording disc is DVD-R.

In this manner, the disc type information demodulation circuit 8 demodulates the WOB signal to the disc type information DI which represents the type of the recording disc 4 (DVD-ROM, DVD-R or DVD-RW), on the basis of the waveform of the wobble signal WOB which corresponds to the wobbling shape of the groove track 103 and/or the wobble characteristic of the wobble pit trains shown in Figure 7. The disc type information demodulation circuit 8 then supplies the disc type information DI to the information demodulation circuit 30 and recordation processing circuit 40.

The information demodulation circuit 30 applies the demodulation process on the read signal Rsum on the basis of the disc type indicated by the disc type information DI, and outputs the resulting information (data). The recordation circuit 40 applies a modulation process on the input information (data) on the basis of the disc type indicated by the disc type information DI, and supplies the resulting modulated signal to the recording/retrieving head 2. The recording/retrieving head 2 radiates the recording beam to the recording surface of a writable (recordable) recording disc 4 (e.g., DVD-R or DVD-RW) rotated by the spindle motor 3. The recording beam is regulated in accordance with the modulated signal. As the recording beam is radiated, the information marks Pt are formed on the groove track 103 of the recording disc 4 as illustrated in Figure 2 on the basis of the recording beam.

**Claims**

1. A recording disc comprising:

   a wobbling recording track on which marks are formed as recorded information, wherein the wobbling recording track has a predetermined wobbling shape in a predetermined area on the recording disc, corresponding to a type of the recording disc.

2. The recording disc according to claim 1, wherein the type of the recording disc is one of a write once type and an erasable type.

3. The recording disc according to claim 1, wherein the predetermined area is located in a read-in area of the recording disc.

**4.** The recording disc according to claim 1, wherein a track pitch of the recording track is less than 0.35 microns.

**5.** The recording disc according to claim 1, wherein a minimum inverting interval of the marks is less than 0.2 microns.

**6.** The recording disc according to claim 1, wherein the recording disc is fabricated by electron beam exposure.

**7.** The recording disc according to claim 1, wherein the wobble recording track has a constant height.

**8.** A recording disc comprising:

a recording track on which marks are formed as recorded information,

wherein the recording track has a predetermined wobbling shape in a predetermined area on the recording disc, corresponding to a type of the recording disc, when the type of the recording disc is one of a write once type and an erasable type, and

wherein the recording track has a wobble pit train, which includes a series of wobbling pits, in the predetermined area on the recording disc when the type of the recording disc is a read only type, and a wobbling characteristic of the wobble pit train represents that the type of the recording disc is the read only type.

**9.** The recording disc according to claim 8, wherein the predetermined area is located in a read-in area of the recording disc.

**10.** The recording disc according to claim 8, wherein a track pitch of the recording track is less than 0.35 microns.

**11.** The recording disc according to claim 8, wherein a minimum inverting interval of the marks is less than 0.2 microns.

**12.** The recording disc according to claim 8, wherein the recording disc is fabricated by electron beam exposure.

**13.** The recording disc according to claim 1, wherein the recording track has a constant height.

**14.** An apparatus for retrieving recorded information from a recording disc, the recording disc having a recording track on which marks are formed representing the recorded information, the apparatus comprising:

a reader which reads the recorded information from the recording track to obtain a read signal; a wobble detector which detects a wobble signal having a waveform corresponding to one of a wobbling shape of the recording track and to a wobbling characteristic of a wobble pit train defined by a series of wobble pits, on the basis of the read signal; and a disc type detector which demodulates the wobble signal to disc type information representing a type of the recording disc on the basis of the waveform of the wobble signal.

**15.** The apparatus according to claim 14, wherein the disc type information is one of a read-only type, a write once type and an erasable type.

**16.** The apparatus according to claim 14, wherein the recording track has a constant height.

# FIG.1

DISC CENTER

READ-IN AREA

DISC PERIPHERY

| PCA | RMA | | CDA | | DATA AREA | READ-OUT AREA |

# FIG.2

# FIG.3

EP 1 280 141 A2

SINGLE ECC BLOCK

| CODED BLOCK | CODED BLOCK |
| --- | --- |

| SYC | IFO | AD | DT | SYC | IFO | AD | DT |
| --- | --- | --- | --- | --- | --- | --- | --- |

# FIG.4

SYNCHRONIZATION WOBBLE PATTERN

WB1　WB1　WB1　WB1　WB2　WB2　WB2　WB2

EP 1 280 141 A2

FIG.5A

LOGIC LEVEL "1"
WOBBLE PATTERN

WB1  WB2

FIG.5B

LOGIC LEVEL "0"
WOBBLE PATTERN

WB2  WB1

# FIG.6

SINGLE ECC BLOCK

CODED BLOCK | CODED BLOCK

| SYC | IFO | AD | DI | | SYC | IFO | AD | DI | |

CDT

CDT

EP 1 280 141 A2

FIG. 7

WOBBLE PIT TRAINS

# FIG.8

INPUT INFORMATION →

RECORDATION PROCESSING CIRCUIT  40

4

3

2

6  PP READ SIGNAL GENERATING CIRCUIT  $R_{PP}$

7  WOBBLE DETECTING CIRCUIT  WOB

8  DISC TYPE INFORMATION MODULATING CIRCUIT  DI

10  BLOCK IDENTIFYING CIRCUIT

9  SYNCHRONIZATION DETECTING CIRCUIT  SD

5  SUM READ SIGNAL GENERATING CIRCUIT  $R_{SUM}$

30  INFORMATION DEMODULATING CIRCUIT → RETRIEVED INFORMATION

EP 1 280 141 A2

14

# FIG.9

20a | 20b → Ra → Rb

20d | 20c → Rc → Rd

DIRECTION ALONG TRACK